# EUROPEAN PATENT APPLICATION

(11) **EP 4 624 615 A1**
(43) Date of publication of application: **01.10.2025**
(21) Application number: 23894645.3
(22) Date of filing: 22.11.2023
(51) Int. Cl.: C22C 38/00, B23K 26/364, C21D 8/12, C21D 9/46, C22C 38/60, H01F 1/147

(54) **GRAIN-ORIENTED ELECTRICAL STEEL SHEET AND MANUFACTURING METHOD THEREFOR**

(30) Priority: 22.11.2022 JP 2022186164
(71) Applicant: NIPPON STEEL CORPORATION, Chiyoda-ku Tokyo 100-8071 (JP)
(72) Inventor: WADA, Naoki, Tokyo 100-8071 (JP); TAKAHASHI, Masaru, Tokyo 100-8071 (JP); MOGI, Hisashi, Tokyo 100-8071 (JP); IWAKI, Masataka, Tokyo 100-8071 (JP)
(74) Representative: Vossius & Partner Patentanwälte Rechtsanwälte mbB
(86) International application number: PCT/JP2023/042045
(87) International publication number: WO 2024/111641

(57) **Abstract**

This grain-oriented electrical steel sheet includes a steel sheet having a surface in which a plurality of grooves extending in a direction intersecting a rolling direction and having a depth in a sheet thickness direction are formed. In a cross section parallel to the rolling direction and parallel to the sheet thickness direction, when a distance from an inlet portion of a groove to an opposite inlet portion of the groove is defined as a width of the groove, a region equivalent to the width of the groove from the inlet portion of the groove of the steel sheet in a direction opposite to a center of the groove in the rolling direction is defined as a groove edge portion, and a surface in a region separated from the inlet portion of the groove in the direction opposite to the center of the groove in the rolling direction is defined as a reference plane, the groove edge portion has a projection that is a region having a width of 1 µm or more and a projection height of 1 µm or more from the reference plane, and an area fraction of Goss oriented grains of the projection is 10% or more.

## Description

### TECHNICAL FIELD

The present invention relates to a grain-oriented electrical steel sheet and a manufacturing method therefor.

Priority is claimed on Japanese Patent Application No. 2022-186164, filed November 22, 2022, the content of which is incorporated herein by reference.

### BACKGROUND ART

A grain-oriented electrical steel sheet is a soft magnetic material and is mainly used as a core material of a transformer. Thus, the grain-oriented electrical steel sheet is required to have magnetic characteristics such as high magnetization characteristics and a low iron loss. The iron loss is a power loss due to thermal energy consumption that occurs in a case where a core is excited by an AC magnetic field, and the iron loss is required to be as low as possible from the viewpoint of energy saving. The level of the iron loss is affected by magnetic susceptibility, a sheet thickness, a coating tension, an impurity amount, an electric resistivity, a crystal grain size, a magnetic domain width, and the like. Even at present when various techniques have been developed regarding the grain-oriented electrical steel sheet, research and development for reducing the iron loss is being continued in order to increase energy efficiency.

A technique for performing laser irradiation has been proposed as one of methods for reducing the iron loss. In this technique, strain is introduced to a surface by the laser irradiation, and a 180° magnetic domain width is refined. As a result, an eddy-current loss that is a part of the iron loss can be reduced.

For example, Patent Document 1 discloses a method for manufacturing a grain-oriented electrical steel sheet in which a magnetic domain is controlled by irradiation with a laser beam. The method includes a step of irradiating a surface of the grain-oriented electrical steel sheet with a condensed continuous wave laser beam while scanning the surface in a direction inclined from a rolling direction of the grain-oriented electrical steel sheet, and a step of repeating a portion scanned with the continuous wave laser beam while shifting the portion at a predetermined interval. When an average power of the continuous wave laser beam is represented as P (W), the scanning speed is represented as Vc (mm/s), the predetermined interval is represented as PL (mm), and an input energy Ua is defined as Ua = P/(Vc × PL) (mJ/mm²), 1.0 mm ≤ PL ≤ 3.0 mm, and 0.8 mJ/mm² ≤ Ua ≤ 2.0 mJ/mm² are satisfied.

Patent Document 1 discloses that iron losses in both directions of an L direction and a C direction of the grain-oriented electrical steel sheet can be reduced easily while ensuring high productivity.

However, for example, in a case where a wound core is manufactured, since the grain-oriented electrical steel sheet is bent and formed, stress-relief annealing is required. Accordingly, in such a method, the strain introduced into the grain-oriented electrical steel sheet is released by the stress-relief annealing. Thus, an effect of controlling the magnetic domain by the laser irradiation cannot be obtained.

Thus, it has been proposed that the 180° magnetic domain width is also refined to reduce the eddy-current loss by forming a groove in a sheet surface as in the case of strain introduction.

For example, Patent Document 2 discloses a method for improving iron loss characteristics of grain-oriented electrical steel sheets to which stress-relief annealing can be applied, in which irradiation is performed by controlling a laser beam and a recessed portion having a width of 0.5 mm or less and a depth of 10 µm or more is formed in a rolling direction.

However, as described above, when the groove is formed by the laser irradiation, a melt generated by the laser irradiation is solidified at a groove edge portion or the like to form a projection. This projection usually includes fine crystal grains having a random crystal orientation other than a Goss orientation. Thus, when the projection is present, a magnetic flux density of the steel sheet decreases, a hysteresis loss that is a part of the iron loss increases, and characteristics become poor.

The projection is removed to some extent by brushing or the like after the laser irradiation. However, even though the brushing or the like is performed, since the brushing is performed so that a sheet thickness is not reduced, it is difficult to completely remove the projection. Such projection is not considered in Patent Document 2.

For such a melt, for example, Patent Document 3 discloses a grain-oriented electrical steel sheet in which a groove is formed in a surface and a magnetic domain refinement treatment is performed. In the grain-oriented electrical steel sheet, a scattering alloy layer of the groove is consumed by Goss texture, and when a thickness of a scattering alloy layer on a bottom surface of the groove is defined as TB and a thickness of the scattering alloy layer at a 1/2 point of a distance between any one terminal end of the groove and the bottom surface of the groove is defined as TL, the TB/TL is 0.2 to 0.8.

However, in Patent Document 3, although an inside of the groove is mentioned, the crystal orientation of the projection formed at the groove edge portion is not mentioned at all.

In addition, Patent Document 4 discloses a grain-oriented electrical steel sheet that includes a steel sheet including a sheet surface in which a groove whose extending direction intersects a rolling direction and whose depth direction is parallel to a sheet thickness direction is formed. Molten solidified materials continuous in parallel with the groove are present on both sides of the groove on the surface of the steel sheet. When a height having a maximum frequency in a height distribution of height data obtained by measuring the sheet surface in a specific region including the groove at regular intervals is an imaginary plane, a space volume of a recessed portion recessed from the imaginary plane is V1, and a volume of a protrusion protruding from the imaginary plane is V2, a value of V2/V1 is more than 0.10 and less than 0.80. A plurality of projections are formed in the specific region, and a width of a projection closest to the groove among the plurality of projections is larger than a width of another projection. In a case where a region having a highest average height in the extending direction in the height distribution is viewed in a longitudinal groove cross-section including the extending direction and the sheet thickness direction, an average roughness Ra of a roughness curve forming a surface of the region is 0.30 to 2.00 µm, and an average length RSm of a roughness curve element forming the surface of the region is 10 to 150 µm.

However, in the technique of Patent Document 4, the crystal orientation of the projection in the region having the highest average height in the extending direction in the height distribution is defined, but a crystal orientation of a projection in the other region is not defined. Although control of the crystal orientation of any projection is important for iron loss reduction, in Patent Document 4, studies on the crystal orientation of the projection and the iron loss reduction have not been sufficiently made.

### Citation List

### Patent Document

Patent Document 1: Japanese Patent No. 4669565
Patent Document 2: Japanese Unexamined Patent Application, First Publication No. H06-57335
Patent Document 3: Japanese Patent No. 6405378
Patent Document 4: Japanese Patent No. 6569803

### SUMMARY OF INVENTION

### Technical Problem

As described above, in the grain-oriented electrical steel sheet, by forming the groove to be substantially parallel to a width direction of the steel sheet, a 180-degree magnetic domain width is refined. As a result, the eddy-current loss that is a part of the iron loss is reduced accordingly. However, in a case where the groove is formed by the laser irradiation, the projection is formed due to the solidification of the melt generated by the laser irradiation at the groove edge portion. Since the projection usually includes the fine crystal grains having the random crystal orientation other than the Goss orientation, when the projection is present, the magnetic flux density of the steel sheet decreases and the hysteresis loss that is a part of the iron loss increases, and characteristics become poor. The projection is removed by brushing or the like after the laser irradiation, but it is difficult to completely remove the projection since the brushing is performed so as not to reduce a sheet thickness.

In addition, in a case where there is the projection at the groove edge portion, there is also a concern that the adhesion of the coating film deteriorates. However, in the related art, the coating adhesion in a case where the projection is present has not been sufficiently studied.

In view of the above circumstances, an object of the present invention is to provide a grain-oriented electrical steel sheet having a low iron loss by suppressing a decrease in a magnetic flux density due to a projection and an increase in a hysteresis loss accompanying the decrease in the magnetic flux density in the grain-oriented electrical steel sheet in which a magnetic domain is refined by forming a groove, and a manufacturing method therefor.

In addition, it is a preferable object to provide a grain-oriented electrical steel sheet capable of obtaining sufficient coating adhesion even in a case where there is a projection.

### Solution to Problem

The present inventors have studied the suppression of the increase in the hysteresis loss due to the projection.

As a result, it has been found that the increase in the hysteresis loss can be suppressed by controlling the crystal orientation of the projection formed at the groove edge portion so as to increase a ratio at which the crystal orientation is the Goss orientation.

In addition, regarding the crystal orientation of the projection at the groove edge portion, it has been found that the ratio at which the crystal orientation of the projection is the Goss orientation at the time of subsequent annealing can be increased by grinding the surface of the steel sheet under a predetermined condition after the groove for forming the groove is formed in the surface of the steel sheet by the laser irradiation.

In addition, it has also been found that the coating adhesion can be further improved by controlling the grinding condition to set the surface roughness to a predetermined range.

The present invention has been made in view of the above findings. The gist of the present invention is as follows.
[1] A grain-oriented electrical steel sheet according to an aspect of the present invention includes a steel sheet having a surface in which a plurality of grooves extending in a direction intersecting a rolling direction and having a depth in a sheet thickness direction are formed. In a cross section parallel to the rolling direction and parallel to the sheet thickness direction, when a distance from an inlet portion of a groove to an opposite inlet portion of the groove is defined as a width of the groove, a region equivalent to the width of the groove from the inlet portion of the groove of the steel sheet in a direction opposite to a center of the groove in the rolling direction is defined as a groove edge portion, and a surface in a region separated from the inlet portion of the groove in the direction opposite to the center of the groove in the rolling direction is defined as a reference plane, the groove edge portion has a projection that is a region having a width of 1 µm or more and a projection height of 1 µm or more from the reference plane, and an area fraction of Goss oriented grains of the projection is 10% or more.
[2] In the grain-oriented electrical steel sheet according to [1], an arithmetical average roughness Ra of a surface of the groove edge portion of the steel sheet along an extending direction of the groove including a vertex of the projection may be more than 2.0 µm and 5.0 µm or less.
[3] In the grain-oriented electrical steel sheet according to [1] or [2], a forsterite film may be formed on the surface of the steel sheet.
[4] In the grain-oriented electrical steel sheet according to [3], an insulating coating may be formed on a surface of the forsterite film.
[5] In the grain-oriented electrical steel sheet according to [1] or [2], an insulating coating may be formed on the surface of the steel sheet.
[6] A method for manufacturing a grain-oriented electrical steel sheet according to another aspect of the present invention is a method for manufacturing the grain-oriented electrical steel sheet according to [1]. The method includes a groove forming step of forming a groove in a surface by performing laser irradiation on a steel sheet, and a grinding step of grinding the surface of the steel sheet by using a brush roll to which abrasive grains are fixed after the groove forming step. In the grinding step, the brush roll rotates in a direction facing a transfer direction of the steel sheet at a position where the brush roll abuts on the steel sheet, a transfer speed of the steel sheet is 20 to 150 mpm, a rotation speed of the brush roll is 500 to 1500 rpm, a rolling reduction of the brush roll is 1.0 to 5.0 mm, the abrasive grains have a grain size of #60 to #400, and the diameter of the brush roll is 200 to 500 mm.
[7] In the method for manufacturing a grain-oriented electrical steel sheet according to [6], the rolling reduction of the brush roll may be 1.0 to 2.0 mm. Advantageous Effects of Invention

According to the above aspects of the present invention, it is possible to provide the grain-oriented electrical steel sheet having the sufficiently high magnetic flux density and the low iron loss, and the manufacturing method therefore.

### BRIEF DESCRIPTION OF DRAWINGS

[FIG. 1] A diagram illustrating an example of a state where a groove of a grain-oriented electrical steel sheet according to the present embodiment is formed.
[FIG. 2] A schematic view of the groove and a periphery of the groove of the grain-oriented electrical steel sheet according to the present embodiment as viewed in a cross section orthogonal to an extending direction of the groove.

### DESCRIPTION OF EMBODIMENTS

A grain-oriented electrical steel sheet according to an embodiment of the present invention (grain-oriented electrical steel sheet according to the present embodiment) and a manufacturing method therefor will be described.

### <Grain-oriented electrical steel sheet>

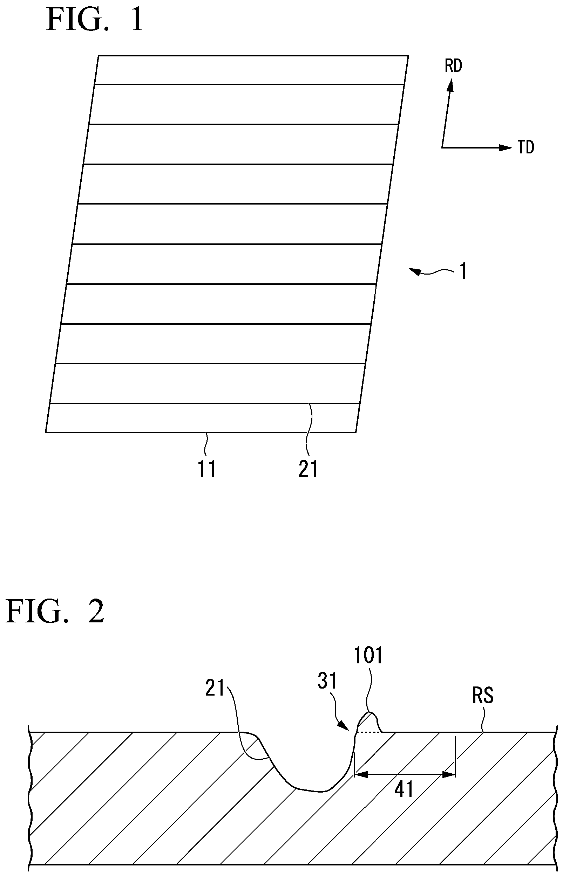

As illustrated in FIG. 1, a grain-oriented electrical steel sheet 1 according to the present embodiment includes a steel sheet (base steel sheet) 11 having a surface in which a plurality of grooves 21 extending in a direction intersecting a rolling direction RD and having a depth in a sheet thickness direction is formed.

A forsterite film or an insulating coating may be formed on the surface of the steel sheet (base steel sheet). In addition, the insulating coating may be formed on a surface of the forsterite film.

That is, the grain-oriented electrical steel sheet according to the present embodiment may be made of not only a steel sheet (base steel sheet) but also a base steel sheet and a forsterite film formed on a surface of the base steel sheet, may be made of a base steel sheet and an insulating coating formed on a surface of the base steel sheet, or may be made of a base steel sheet, a forsterite film formed on a surface of the base steel sheet, and an insulating coating formed on a surface of the forsterite film.

The forsterite film and the insulating coating may be formed on one surface or may be formed on both surfaces.

Hereinafter, both the above cases will be described.

### [Steel sheet (base steel sheet)]

### (Groove)

As illustrated in FIG. 1, the steel sheet 11 has the plurality of grooves 21 formed by laser irradiation in the surface thereof, extending in the direction intersecting the rolling direction RD and having a depth in the sheet thickness direction. The steel sheet is, for example, a cold rolled sheet.

Magnetic domain refinement can be performed by periodically forming linear grooves in the direction intersecting the rolling direction RD. In the grain-oriented electrical steel sheet according to the present embodiment, in order to obtain this effect, the grooves are formed in the surface of the steel sheet (in the grain-oriented electrical steel sheet on which the forsterite film or the insulating coating is formed, a so-called base steel sheet excluding the forsterite film or the insulating coating).

Here, the direction intersecting the rolling direction RD is a direction of 60 to 120° with respect to the rolling direction RD.

The shape of the groove is not limited as long as the effect of the magnetic domain refinement can be obtained, but the depth is preferably 10 to 50 µm and the width is preferably 10 to 200 µm. Among the plurality of grooves, an interval between adjacent grooves in the rolling direction RD is preferably 1 to 20 mm. The plurality of grooves are preferably formed at substantially regular intervals (periodically) in the rolling direction RD so as to be substantially parallel to each other. The interval between the grooves is a distance from a center of the groove in a width direction to a center of an adjacent groove in the width direction.

### (Projection)

As described above, in the grain-oriented electrical steel sheet, a 180-degree magnetic domain width is refined by forming the grooves in the direction intersecting the rolling direction RD of the steel sheet, and an eddy-current loss that is a part of an iron loss is reduced accordingly. However, in a case where the grooves are formed by the laser irradiation, a projection is formed by solidifying a melt generated by the laser irradiation at a groove edge portion. Since the projection usually includes the fine crystal grains having the random crystal orientation other than the Goss orientation, when the projection is present, the magnetic flux density of the steel sheet decreases and the hysteresis loss that is part of the iron loss increases, and characteristics become poor. The projection is removed by brushing or the like after the laser irradiation, but since the brushing is performed so as not to reduce a sheet thickness, it is difficult to completely remove the projection.

Thus, in the grain-oriented electrical steel sheet according to the present embodiment, the crystal orientation of the projection formed at the groove edge portion is controlled instead of removing the projection, and an area fraction of crystal grains (Goss oriented grains) in which a crystal orientation occupied by the projection is the Goss orientation is set to 10% or more. As a result, the increase in the hysteresis loss is suppressed. When the area fraction of the Goss oriented grains is less than 10%, the magnetic flux density of the steel sheet decreases, and the hysteresis loss that is part of the iron loss increases.

In addition, there is a concern that coating adhesion deteriorates in a portion where the projection is present. Thus, in the grain-oriented electrical steel sheet according to the present embodiment, it is preferable to control roughness of a surface of the groove edge portion including the projection.

Specifically, an arithmetical average roughness Ra of a surface of the groove including a vertex of the projection (a point at which a protrusion height is maximized) along an extending direction is preferably more than 2.0 µm and 5.0 µm or less. In this case, exceptional coating adhesion is obtained.

When Ra is 2.0 µm or less, since the surface is smooth, an effect of improving the coating adhesion cannot be obtained. On the other hand, when Ra exceeds 5.0 µm, the surface is too rough, and thus, the coating is easily peeled off. As a result, the effect of improving the coating adhesion cannot be obtained.

Here, in the present embodiment, as illustrated in FIGS. 1 and 2, in a cross section parallel to the rolling direction RD and parallel to the sheet thickness direction, a distance from an inlet portion 31 of the groove 21 (a position where a side surface of the groove having a concave shape with respect to a reference plane intersects an imaginary line extending the reference plane) to an opposite inlet portion 31 of the groove 21 is defined as a width of the groove 21, and a region equivalent to the width of the groove 21 from the inlet portion of the groove 21 of the steel sheet 11 in a direction opposite to a center of the groove 21 in the rolling direction RD is defined as a groove edge portion 41. In addition, when a surface in a region separated from the inlet portion 31 of the groove 21 by the width of the groove 21 or more in the direction opposite to a center of the groove 21 in the rolling direction RD (that is, a region farther from the groove 21 than the groove edge portion 41) is defined as a reference plane RS, in the groove edge portion 41, a region having a width at a height of the reference plane RS (a length in a direction perpendicular to a height direction (a length of a dotted line portion in FIG. 2)) of 1 µm or more and a projection height from the reference plane RS of 1 µm or more is defined as a projection 101.

The area fraction of the crystal grains of the Goss orientation of the projection 101 can be increased by a manufacturing method including a grinding step to be described later. The Ra of the groove edge portion including the vertex of the projection can be controlled by the manufacturing method including the grinding step to be described later.

The area fraction of the crystal grains in which the crystal orientation of the projection at the groove edge portion is the Goss orientation is obtained by the following method.

First, a sample is collected from the grain-oriented electrical steel sheet to be measured such that a cross section orthogonal to the longitudinal direction (extending direction) of the groove is exposed. At this time, the cross section is taken so as to include the groove and the groove edge portion.

The cross section is polished, and thus, the cross section including the groove and the peripheral portion thereof shown in FIG. 2 is exposed, and then the cross section is observed. 10 or more cross sections in total are observed, and in a case where one or more projections are present at the groove edge portion, it is determined that at least one projection is present.

In addition, in a case where the projection is present, the crystal orientation of the projection is measured by an electron back scattering diffraction pattern (EBSD) method to be described later. The crystal grains having an orientation difference of 10° or less from an accurate Goss orientation {110}<001> are defined as the Goss oriented grains, and the area fraction of the Goss oriented grains of the projection is obtained. In a case where a plurality of projections are present in the observed cross section, the area fraction of the Goss oriented grains is obtained for each projection, and an average value thereof is taken as the area fraction of the Goss oriented grains.

Measurement conditions of EBSD are as follows.
(a) Measurement apparatus: FE-SEM "SU-70" (manufactured by Hitachi High-Tech Corporation)
   EBSD apparatus "DigiView" (manufactured by TSL Solutions)
(b) Magnification: 500 times
(c) Step interval: 0.25 µm
(d) Measurement region: 200 µm in direction intersecting longitudinal groove direction × 70 µm in sheet thickness direction

The arithmetical average roughness Ra of the surface of the groove edge portion including the vertex of the projection is obtained by the following method.

A height distribution is obtained in a range of 1000 µm in the extending direction of the groove and 400 µm (200 µm on one side of the groove) around the groove set as the center in a direction orthogonal to the extending direction of the groove on a sheet surface by using a laser type surface roughness measuring instrument. In this measurement, a laser spot diameter is set to 0.40 µm or less (for example, 0.40 µm), scanning is performed in a step of 0.30 µm or less (for example, 0.30 µm), measurement accuracy in the height direction is set to 0.10 µm or less, and a magnification of an objective lens is set to 50 times.

As a result of this measurement, a point at which the height becomes maximum is defined as the vertex of the projection. A measured cross-sectional curve of a cross section including a surface including the vertex of the projection, parallel to the extending direction of the groove, and parallel to the sheet thickness direction of the steel sheet is obtained. A roughness curve is obtained by applying a low-pass filter with a cutoff value λs and a wide-area filter with a cutoff value λc to the measured cross-sectional curve. From this roughness curve, the arithmetical average roughness Ra is obtained in accordance with JIS B 0601 (2013).

At that time, the cutoff values λs and λc are determined by a model of the laser type surface roughness measuring instrument and the objective lens. In the present embodiment, λs = 0.8 µm and λc = 0.08 mm are used as cutoff values when roughness is measured with a VK-9700 manufactured by KEYENCE CORPORATION at an objective lens magnification of 50 times.

### (Chemical composition)

A chemical composition of the base steel sheet is not limited as long as a chemical composition thereof is equivalent to a chemical composition of a base steel sheet of a known grain-oriented electrical steel sheet. For example, Si: 2.5 to 4.5%, Mn: 0.01 to 0.15%, C: 0 to 0.085%, acid-soluble Al: 0 to 0.065%, N: 0 to 0.012%, Cr: 0 to 0.30%, Cu: 0 to 0.40%, P: 0 to 0.50%, Sn: 0 to 0.30%, Sb: 0 to 0.30%, Ni: 0 to 1.000%, S: 0 to 0.015%, Se: 0 to 0.015%, and Bi: 0 to 0.02% in mass% can be contained. In addition, the grain-oriented electrical steel sheet may contain the above-described chemical composition and the remainder of Fe and impurities.

In a case where the grain-oriented electrical steel sheet is made of the base steel sheet (the forsterite film and the insulating coating are not included), it can be said that the chemical composition of the base steel sheet is the chemical composition of the grain-oriented electrical steel sheet.

The chemical composition of the base steel sheet may be measured by a general analysis method of steel. For example, the chemical component of the base steel sheet may be measured by inductively coupled plasma-atomic emission spectrometry (ICP-AES). Specifically, for example, the chemical composition can be specified by acquiring a test piece of 35 mm square (35 mm in the rolling direction and the width direction) from a center position of the base steel sheet after removal of the coating, and performing measurement under a condition based on a calibration curve created in advance using ICPS-8100 manufactured by Shimadzu Corporation or the like (measurement apparatus). C and S may be measured by a combustion-infrared absorption method, and N may be measured by an inert gas melting-thermal conductivity method. In a case where the forsterite film and the insulating coating to be described later are formed, the chemical component of the base steel sheet may be analyzed after removing the forsterite film and the insulating coating from the grain-oriented electrical steel sheet by a known method such as pickling.

### (Sheet thickness)

A sheet thickness of the base steel sheet of the grain-oriented electrical steel sheet according to the present embodiment is not limited, but is preferably, for example, 0.15 to 0.35 mm from the viewpoint that the eddy-current loss is reduced as the sheet thickness is thinner.

### [Forsterite film]

In the grain-oriented electrical steel sheet according to the present embodiment, the forsterite film may be formed on the surface of the steel sheet to become the base steel sheet.

The forsterite film is an inorganic coating containing magnesium silicate as a main component. The forsterite film is formed by reaction of an annealing separator containing magnesia (MgO) applied to the surface of the base steel sheet with a component of the surface of the base steel sheet in final annealing, and has a composition (more specifically, a composition containing Mg₂SiO₄ as a main component) derived from the annealing separator and the component of the base steel sheet.

On the other hand, in a case where an annealing separator mainly containing Al₂O₃ is used in the final annealing, the forsterite film may not be formed.

### [Insulating coating]

In the grain-oriented electrical steel sheet according to the present embodiment, the insulating coating may be formed on the surface of the base steel sheet or the surface of the forsterite film.

The insulating coating imparts electrical insulation properties to the grain-oriented electrical steel sheet to reduce the eddy-current loss, and thus, the iron loss of the grain-oriented electrical steel sheet is reduced. The insulating coating has a function of applying a tension to the grain-oriented electrical steel sheet. The tension is applied to the grain-oriented electrical steel sheet to facilitate domain wall movement in the grain-oriented electrical steel sheet, and thus, the iron loss of the grain-oriented electrical steel sheet can be improved.

In addition, according to the insulating coating, various properties such as corrosion resistance, heat resistance, and slippage can be obtained in addition to the electrical insulation properties as described above.

In the grain-oriented electrical steel sheet according to the present embodiment, the insulating coating may be, for example, a known coating formed by applying a coating solution containing phosphate and colloidal silica as main components to the surface of the forsterite film and baking the coating solution.

### <Manufacturing method>

An effect of the grain-oriented electrical steel sheet according to the present embodiment can be obtained regardless of the manufacturing method as long as the grain-oriented electrical steel sheet has the above-described characteristics, but a manufacturing method including the following steps is preferable as long as such a manufacturing method enables stable manufacture.
(I) A hot rolling step of heating and hot rolling a slab to form a hot rolled sheet,
(II) A hot rolled sheet annealing step of annealing the hot rolled sheet after the hot rolling step,
(III) A cold rolling step of pickling and cold rolling the hot rolled sheet after the hot rolled sheet annealing step to obtain a steel sheet (cold rolled sheet),
(IV) A groove forming step of forming a groove in a surface by performing laser irradiation on the steel sheet,
(V) A grinding step of grinding the surface of the steel sheet after the groove forming step by using a brush roll to which abrasive grains are fixed,
(VI) A decarburization annealing step of performing decarburization annealing on the steel sheet after the grinding step, and
(VII) A final annealing step of applying an annealing separator to the steel sheet after the decarburization annealing step and performing final annealing.

In addition, the method for manufacturing a grain-oriented electrical steel sheet according to the present embodiment may further include one or both of the following steps.
(VIII) A nitriding treatment step of increasing a nitrogen content of the steel sheet after the decarburization annealing step, and
(IX) An insulating coating forming step of forming an insulating coating on the surface of the steel sheet after the final annealing step (or the surface of the forsterite film formed on the surface of the steel sheet).

Among these steps, the method for manufacturing a grain-oriented electrical steel sheet according to the present embodiment is characterized by the groove forming step and the grinding step. On the other hand, the hot rolling step, the hot rolled sheet annealing step, the cold rolling step, the decarburization annealing step, the nitriding treatment step, the final annealing step, and the insulating coating forming step are not particularly limited, and can be performed under known conditions.

Hereinafter, preferred conditions will be described. Conditions that are not described can also be performed under known conditions.

### [Hot rolling step]

In the hot rolling step, a slab having a predetermined chemical composition (a chemical composition corresponding to the chemical composition of the base steel sheet of the grain-oriented electrical steel sheet according to the present embodiment) is heated and hot rolled to form the hot rolled sheet.

The condition is not limited, and for example, a heating temperature is 1050 to 1400°C.

The chemical composition of the slab to be subjected to the hot rolling may be determined in consideration of a change in the chemical composition in each step in accordance with the chemical composition desired to be obtained as the grain-oriented electrical steel sheet.

For example, in a case where the preferred chemical composition of the base steel sheet of the grain-oriented electrical steel sheet according to the present embodiment described above, it is preferable to use the slab having the following chemical composition.

Si: 2.5 to 4.5%, Mn: 0.01 to 0.15%, C: 0.02 to 0.10%, acid-soluble Al: 0 to 0.065%, N: 0.002 to 0.030%, Cr: 0 to 0.30%, Cu: 0 to 0.40%, P: 0 to 0.50%, Sn: 0 to 0.30%, Sb: 0 to 0.30%, Ni: 0 to 1.000%, S: 0.001 to 0.050%, Se: 0 to 0.050%, and Bi: 0 to 0.02% in mass% can be contained. In addition, the grain-oriented electrical steel sheet may contain the above-described chemical composition and the remainder of Fe and impurities.

A method for obtaining the slab is not limited. For example, molten steel having a predetermined chemical composition may be melted and manufactured by using the molten steel. The slab may be manufactured by a continuous casting method, or an ingot may be manufactured by using the molten steel, and the slab may be manufactured by blooming-rolling the ingot. In addition, the slab may be manufactured by other methods.

A thickness of the slab is not particularly limited, and is, for example, 150 to 350 mm. The thickness of the slab is preferably 220 to 280 mm. A so-called thin slab having a thickness of 10 to 70 mm may be used.

### [Hot rolled sheet annealing step]

In the hot rolled sheet annealing step, the hot rolled sheet after the hot rolling step is annealed. By performing such an annealing treatment is performed, recrystallization occurs in the metallographic structure, and favorable magnetic characteristics can be realized.

In the hot rolled sheet annealing step of the present embodiment, the hot rolled sheet manufactured through the hot rolling step may be annealed according to a known method. A technique for heating the hot rolled sheet at the time of annealing is not particularly limited, and a known heating method can be adopted. In addition, annealing conditions are also not particularly limited, but for example, the hot rolled sheet can be annealed in a temperature range of 900 to 1200°C for 10 seconds to 5 minutes.

### [Cold rolling step]

In the cold rolling step, the cold rolled sheet is obtained by pickling and cold rolling the hot rolled sheet after the hot rolled sheet annealing step. The cold rolling may be one time of cold rolling (a series of cold rolling without intermediate annealing). Before a final pass of the cold rolling step, cold rolling may be interrupted, at least one or more times of intermediate annealing may be performed, and a plurality of times of cold rolling may be performed with intermediate annealing interposed therebetween.

Conditions for the cold rolling may be in accordance with a known method. For example, a final rolling reduction can be in a range of 80% or more and 95% or less.

The final rolling reduction is a cumulative rolling reduction of cold rolling, and when intermediate annealing is performed, the final rolling reduction is a cumulative rolling reduction of cold rolling after the final intermediate annealing.

In a case where the intermediate annealing is performed, it is preferable to hold the intermediate annealing at a temperature of 1000 to 1200°C for 5 to 180 seconds. An annealing atmosphere is not particularly limited. The number of times of intermediate annealing is preferably three or less in consideration of manufacturing cost.

In addition, pickling may be performed under known conditions.

### [Groove forming step]

In the groove forming step, the groove is formed on the surface by performing the laser irradiation on the cold rolled sheet (the steel sheet after the cold rolling). A method for forming the groove by melting a part of the sheet surface by performing the irradiation while scanning the laser in a direction in which the groove is formed (direction intersecting the rolling direction) and removing the melt from the surface is preferable. Examples of a method for removing the melt from the surface include spraying of an assist gas.

In addition, it is preferable that the laser irradiation is performed while moving in the width direction multiple times such that the grooves are arranged substantially in parallel at regular intervals (for example, 1 to 10 mm) in the rolling direction.

Laser irradiation conditions are not limited, but in order to form a groove having a predetermined shape (for example, a depth is 10 to 50 µm and a width of the groove is 10 to 200 µm), it is preferable to set the laser output to 200 to 3000 W, the condensed spot diameter of the laser (that is, the diameter including 86% of the laser output) in the rolling direction to 10 to 1000 µm, the condensed spot diameter of the laser (that is, the diameter including 86% of the laser output) in the sheet width direction to 10 to 1000 µm, and the laser scanning speed to 5 to 50 m/s.

The groove is formed in the surface of the cold rolled sheet (to become the base steel sheet), the magnetic domain width is refined, and the magnetic characteristics are improved.

### <Grinding step>

In the grinding step, the surface of the steel sheet after the groove forming step is ground by using a brush roll to which abrasive grains are fixed. By performing grinding under appropriate conditions, it is possible to apply strain to the projection formed at the groove edge portion while avoiding a decrease in the sheet thickness (a part of the projection is removed by grinding, but part remains). In the projection to which the strain is applied, a driving force of the recrystallization increases, primary recrystallization and grain growth occur in a subsequent decarburization annealing step, and the projection is easily consumed by the Goss orientation during the final annealing. Accordingly, the projection to which the strain is applied is secondarily recrystallized during the final annealing, and the area fraction of the Goss oriented grains increases (in the case of random recrystallization without imparting the strain, the area fraction of the Goss oriented grains is usually less than 5%, but becomes 10% or more through the grinding step).

In order to apply appropriate strain, grinding is performed by using a brush roll that rotates in a direction facing a transfer direction of the steel sheet at a position where the brush roll abuts on the steel sheet while moving the steel sheet at a transfer speed of 20 to 150 meter/mimutes (mpm) under the conditions that a rotation speed of the brush roll is 500 to 1500 rpm, a rolling reduction of the brush roll is 1.0 to 5.0 mm, a grain size of the abrasive grains is #60 to #400, and a diameter of the brush roll is 200 to 500 mm.

When the transfer speed (line speed) of the steel sheet is less than 20 mpm, since the amount of grinding is too large, the sheet thickness decreases. On the other hand, when the transfer speed exceeds 150 mpm, the amount of strain applied by grinding is not sufficient, and the area fraction of the Goss oriented grains does not increase.

In addition, when the rotation speed of the brush roll is less than 500 rpm, the amount of strain applied by grinding is not sufficient, and the area fraction of the Goss oriented grains does not increase. On the other hand, when the rotation speed exceeds 1500 rpm, since the amount of grinding is too large, the sheet thickness decreases.

When the rolling reduction of the brush roll is less than 1.0 mm, the amount of strain applied by grinding is not sufficient, and the area fraction of the Goss oriented grains does not increase. On the other hand, when the rolling reduction exceeds 5.0 mm, since the amount of grinding is too large, the sheet thickness decreases.

When the grain size of the abrasive grains is less than #60, since the amount of grinding is too large, the sheet thickness decreases. On the other hand, when the grain size exceeds #400, the amount of strain applied by grinding is not sufficient, and the area fraction of the Goss oriented grains does not increase.

When the diameter of the brush roll is less than 200 mm, since the amount of grinding is too large, the sheet thickness decreases. On the other hand, when the thickness exceeds 500 mm, the amount of strain applied by grinding is not sufficient, and the area fraction of the Goss oriented grains does not increase.

In addition, preferably, the transfer speed of the steel sheet is 20 to 150 mpm, the rotation speed of the brush roll is 500 to 1000 rpm, the rolling reduction of the brush roll is 1.0 to 4.0 mm, the grain size of the abrasive grains is #100 to #400, and the diameter of the brush roll is 200 to 500 mm.

More preferably, the rolling reduction of the brush roll is 1.0 to 2.0 mm. Such a rolling reduction is set, and thus, a roughness Ra of a longitudinal groove cross-section including the vertex of the projection can be set in a range of more than 2.0 µm and 5.0 µm or less.

### [Decarburization annealing step]

In the decarburization annealing step, the decarburization annealing is performed on the steel sheet after the grinding step. In this decarburization annealing, carbon that adversely affects magnetic characteristics is removed (decarburized) from the steel sheet, and the steel sheet is primarily recrystallized.

Although the decarburization annealing conditions are not limited, conditions of being heated to 700 to 900°C and held for 1 to 3 minutes can be used.

### [Nitriding treatment step]

After the decarburization annealing step and before the final annealing step, the nitriding treatment for increasing the nitrogen content of the grain-oriented electrical steel sheet may be performed. The nitriding treatment may be performed by a known method, and for example, nitrogen is infiltrated into the steel by annealing in an atmosphere containing a gas having nitriding ability such as ammonia. Thus, an inhibitor for secondary recrystallization can be nitrided.

### [Final annealing step]

In the final annealing step, the annealing separator is applied to the steel sheet after the decarburization annealing step, and the final annealing is performed.

Since the final annealing is performed after the steel sheet is coiled into a coil shape, the annealing separator is applied during the final annealing such that the steel sheet is not baked. In general, an annealing separator mainly containing MgO or Al₂O₃ is used. The final annealing is performed after applying such an annealing separator. For example, when the annealing separator containing MgO is used, a forsterite (Mg₂SiO₄) coating layer is formed. In a case where the annealing separator containing Al₂O₃ as the main component is used, the forsterite film may not be formed.

In addition, in the final annealing step, primary recrystallized grains obtained in the decarburization annealing step are secondarily recrystallized by heating to an annealing temperature to obtain crystal grains aligned in the Goss orientation, and impurities (N, S, and the like) that adversely affect the magnetic characteristics are removed (purified) by holding the crystal grains at the annealing temperature for a predetermined time.

In the method for manufacturing a grain-oriented electrical steel sheet according to the present embodiment, in the steel sheet to be subjected to the decarburization annealing, the driving force of the recrystallization is increased by the strain introduced in the grinding step, the primary recrystallization and the grain growth occur in the decarburization annealing step, and the steel sheet is easily consumed by the Goss orientation during the final annealing. Thus, in the projection, the area fraction of the crystal grains having the Goss orientation is increased.

The conditions for the final annealing are not limited, but conditions of being heated to 1100 to 1300°C and held for 20 to 24 hours is exemplified.

### [Insulating coating forming step]

In the insulating coating forming step, the insulating coating is formed on the steel sheet (or on the surface of the forsterite film in a case where the forsterite film is formed on the surface of the steel sheet by the final annealing) after the final annealing step.

For example, the insulating coating can be formed by applying a coating solution containing phosphoric acid or a phosphate, colloidal silica, and chromic anhydride or a chromate to the steel sheet (including the steel sheet having the forsterite film) after the final annealing, baking the coating solution at 300 to 950°C for 10 seconds or more and drying the coating solution.

Through these steps, it is possible to obtain the grain-oriented electrical steel sheet including the base steel sheet and the forsterite film and/or the insulating coating as necessary.

### Examples

A hot rolled sheet having a sheet thickness of 2.6 mm was obtained by performing the hot rolling step on a slab having a chemical composition containing Si: 3.3%, C: 0.060%, acid-soluble Al: 0.028%, N: 0.008%, Mn: 0.12%, Cr: 0.05%, Cu: 0.04%, P: 0.01%, Sn: 0.02%, Ni: 0.005%, and S: 0.007% in mass fraction with the remainder being Fe and impurity.

The hot rolled sheet was hot rolled sheet annealed under the conditions of being heated to 1000°C and held for 1 minute.

A steel sheet (cold rolled sheet) having a sheet thickness of 0.23 mm was obtained by pickling and cold rolling the hot rolled sheet after the hot rolled sheet annealing under a condition that a final rolling reduction was 91%.

The laser irradiation was performed on the steel sheet under the conditions that the laser output was 1500 W, the condensed spot diameter of the laser in the rolling direction was 40 µm, the condensed spot diameter of the laser in the sheet width direction was 40 µm, and the scanning speed was 45 m/s, and, a groove extending in a direction of 90° with respect to the rolling direction and having a width of 40 µm and a depth of 30 µm could be formed in the surface. In addition, a plurality of grooves were formed at intervals of 5 mm in the rolling direction so as to be parallel to each other.

The surface of the steel sheet in which the groove was formed was ground under the conditions shown in Table 1 by using the brush roll rotating in the direction facing the transfer direction of the steel sheet.

After grinding, the decarburization annealing was performed under the conditions of heating to 800°C and holding for 2 minutes.

An annealing separator containing magnesia (MgO) as a main component was applied to the steel sheet after the decarburization annealing, and the final annealing was performed on the steel sheet under the conditions of being heated to 1200°C and held for 20 hours. As a result, the grain-oriented electrical steel sheet in which the forsterite film was formed on the surface of the steel sheet (base steel sheet) was obtained.

The insulating coating was formed by applying a coating solution containing colloidal silica and a phosphate to the obtained grain-oriented electrical steel sheet and performing heat treatment under conditions of being heated to 850°C and held for 1 minute.

The chemical composition of the base steel sheet of the obtained grain-oriented electrical steel sheet was obtained, and it was found that the base steel sheet contained Si: 3.3%, C: 0.001% or less, acid-soluble Al: 0.004% or less, N: 0.001% or less, Mn: 0.12%, Cr: 0.05%, Cu: 0.04%, P: 0.01%, Sn: 0.02%, Ni: 0.005%, and S: 0.001% or less in mass fraction, with the remainder being Fe and impurity.

From the obtained grain-oriented electrical steel sheet, the area fraction of the Goss oriented grains of the projection was obtained by the EBSD method in the same manner as described above.

In addition, in the same manner as described above, the measured cross-sectional curve of the cross section including the surface including the vertex of the projection, parallel to the extending direction of the groove, and parallel to the sheet thickness direction of the steel sheet was obtained, and the arithmetical average roughness Ra was obtained from the roughness curve obtained from this measured cross-sectional curve in accordance with JIS B 0601 (2013).

Table 1 shows the results.

In addition, a sample of 60 mm in the width direction and 300 mm in the rolling direction was collected from the obtained grain-oriented electrical steel sheet, and a single-sheet magnetic characteristic test (SST test) was performed on this sample in accordance with JIS C2556 (2015) to measure an iron loss W17/50 at a frequency of 50 Hz and a maximum magnetic flux density of 1.7 T. In addition, a magnetic flux density B8 generated at the time of magnetization at 800 A/m was measured.

Table 1 shows the results.

When B8 was 1.88 T or more and W17/50 was 0.750 W/kg or less, it was determined that excellent magnetic characteristics were exhibited.

In addition, the adhesion (coating adhesion) of the insulating coating of the obtained grain-oriented electrical steel sheet was evaluated by the following method.

A test piece having sheet thickness × 80 mm × 80 mm was cut out from a portion including the groove edge portion of the obtained grain-oriented electrical steel sheet, and this test piece was wound around a round bar having a diameter of 20 mm, and was then flattened.

A surface of the test piece after being flattened was observed, and an area of the insulating coating not peeled off from the steel sheet with respect to an area of a bent portion was measured and calculated a film residual area fraction (%).

Insulating coating adhesion of a test piece in which the film residual area fraction was 95% or more was evaluated as "excellent", insulating coating adhesion of a test piece in which the film residual area fraction was 90% or more and less than 95% was evaluated as "good", and insulating coating adhesion of a test piece in which the film residual area fraction was less than 90% was evaluated as "defective".

**[Table 1]**

| | Transfer speed | Brush roll rotation speed | Rolling reduction [mm] | Grain size of abrasive grains | | Brush roll diameter | Presence or absence of projection | Area fraction of Goss oriented grains of projection portion | Groove edge portion Ra | B8 | W17/50 | Coating adhesion |
|---|---|---|---|---|---|---|---|---|---|---|---|---|
| | [mpm] | [rpm] | | | | [mm] | | [%] | [µm] | [T] | [W/kg] | |
| Invention Example 1 | 30 | 1200 | 3.0 | # | 80 | 320 | Presence | 30 | 0.5 | 1.91 | 0.730 | Good |
| Invention Example 2 | 140 | 1200 | 3.0 | # | 80 | 300 | Presence | 20 | 0.8 | 1.90 | 0.739 | Good |
| Invention Example 3 | 30 | 600 | 3.0 | # | 80 | 300 | Presence | 15 | 1.4 | 1.89 | 0.741 | Good |
| Invention Example 4 | 30 | 1200 | 5.0 | # | 80 | 300 | Presence | 40 | 0.4 | 1.92 | 0.725 | Good |
| Invention Example 5 | 30 | 1200 | 3.0 | # | 400 | 300 | Presence | 12 | 1.5 | 1.88 | 0.748 | Good |
| Invention Example 6 | 30 | 1200 | 3.0 | # | 80 | 500 | Presence | 35 | 1.9 | 1.91 | 0.735 | Good |
| Invention Example 7 | 30 | 1200 | 1.0 | # | 80 | 300 | Presence | 20 | 4.5 | 1.91 | 0.740 | Excellent |
| Invention Example 8 | 40 | 1000 | 2.0 | # | 80 | 300 | Presence | 35 | 2.2 | 1.92 | 0.722 | Excellent |
| Invention Example 9 | 30 | 600 | 1.5 | # | 80 | 300 | Presence | 40 | 3.7 | 1.90 | 0.749 | Excellent |
| Invention Example 10 | 140 | 800 | 2.0 | # | 80 | 300 | Presence | 40 | 2.5 | 1.91 | 0.738 | Excellent |
| Comparative Example 1 | 30 | 100 | 3.0 | # | 80 | 320 | Presence | 5 | 0.8 | 1.87 | 0.784 | Good |
| Comparative Example 2 | 200 | 1200 | 3.0 | # | 80 | 320 | Presence | 8 | 1.0 | 1.86 | 0.791 | Good |
| Comparative Example 3 | 30 | 1200 | 0.5 | # | 80 | 300 | Presence | 7 | 5.1 | 1.87 | 0.774 | Good |
| Comparative Example 4 | 30 | 1200 | 3.0 | # | 500 | 300 | Presence | 9 | 1.7 | 1.85 | 0.801 | Good |
| Comparative Example 5 | 30 | 1200 | 3.0 | # | 80 | 600 | Presence | 6 | 1.5 | 1.86 | 0.788 | Good |
| Comparative Example 6 | 30 | 1200 | 6.0 | # | 80 | 300 | Absence | - | 1.8 | 1.87 | 0.780 | Good |

As can be seen from Table 1, when the area fraction of the Goss oriented grains of the projection (projection portion) was 10% or more, a grain-oriented electrical steel sheet having high B8 and low W17/50 was obtained (Invention Examples 1 to 10). In addition, all of these had sufficient coating adhesion, but when Ra was within a preferable range, the coating adhesion was particularly excellent (Invention Examples 7 to 10).

On the other hand, as shown in Comparative Examples (1 to 6), in a case where the grinding conditions such as the transfer speed, the brush roll rotation speed, the rolling reduction, the grain size of the abrasive grains, and the brush roll diameter were not within preferable ranges, the projection was not present, or the area fraction of the Goss oriented grains of the projection was low, and B8 was low and W17/50 was high.

### INDUSTRIAL APPLICABILITY

According to the present invention, it is possible to provide the grain-oriented electrical steel sheet having a sufficiently high magnetic flux density and a low iron loss, and the manufacturing method therefor. Thus, industrial applicability is high.

### REFERENCE SIGNS LIST

1 Grain-oriented electrical steel sheet
11 Steel sheet (base steel sheet)
21 Groove
31 Inlet portion
41 Groove edge portion
101 Projection
RD Rolling direction
TD Sheet width direction
RS Reference plane

## Claims

1. A grain-oriented electrical steel sheet comprising:
a steel sheet having a surface in which a plurality of grooves extending in a direction intersecting a rolling direction and having a depth in a sheet thickness direction are formed,
wherein, in a cross section parallel to the rolling direction and parallel to the sheet thickness direction, when a distance from an inlet portion of a groove to an opposite inlet portion of the groove is defined as a width of the groove, a region equivalent to the width of the groove from the inlet portion of the groove of the steel sheet in a direction opposite to a center of the groove in the rolling direction is defined as a groove edge portion, and a surface in a region separated from the inlet portion of the groove in the direction opposite to the center of the groove in the rolling direction is defined as a reference plane,
the groove edge portion has a projection that is a region having a width of 1 µm or more and a projection height of 1 µm or more from the reference plane, and
an area fraction of Goss oriented grains of the projection is 10% or more.

2. The grain-oriented electrical steel sheet according to claim 1, wherein
an arithmetical average roughness Ra of a surface of the groove edge portion of the steel sheet along an extending direction of the groove including a vertex of the projection is more than 2.0 µm and 5.0 µm or less.

3. The grain-oriented electrical steel sheet according to claim 1 or 2, wherein
a forsterite film is formed on the surface of the steel sheet.

4. The grain-oriented electrical steel sheet according to claim 3, wherein
an insulating coating is formed on a surface of the forsterite film.

5. The grain-oriented electrical steel sheet according to claim 1 or 2, wherein
an insulating coating is formed on the surface of the steel sheet.

6. A method for manufacturing the grain-oriented electrical steel sheet according to claim 1, comprising:
a groove forming step of forming a groove in a surface by performing laser irradiation on a steel sheet; and
a grinding step of grinding the surface of the steel sheet by using a brush roll to which abrasive grains are fixed after the groove forming step,
wherein, in the grinding step,
the brush roll rotates in a direction facing a transfer direction of the steel sheet at a position where the brush roll abuts on the steel sheet,
a transfer speed of the steel sheet is 20 to 150 mpm,
a rotation speed of the brush roll is 500 to 1500 rpm,
a rolling reduction of the brush roll is 1.0 to 5.0 mm,
the abrasive grains have a grain size of #60 to #400, and
a diameter of the brush roll is 200 to 500 mm.

7. The method for manufacturing a grain-oriented electrical steel sheet according to claim 6, wherein
the rolling reduction of the brush roll is 1.0 to 2.0 mm.
